# EUROPEAN PATENT APPLICATION

(11) **EP 4 672 417 A1**
(43) Date of publication of application: **31.12.2025**
(21) Application number: 24877496.0
(22) Date of filing: 08.10.2024
(51) Int. Cl.: H01M 10/0585, H01M 4/70, H01M 4/13, H01M 10/48, G01B 11/08

(54) **ELECTRODE CELL AND MANUFACTURING METHOD THEREFOR**

(30) Priority: 11.10.2023 KR 20230135425
(71) Applicant: LG Energy Solution, Ltd., Seoul 07335 (KR)
(72) Inventor: PARK, Chan Woo, Daejeon 34122 (KR); KO, Myung Hoon, Daejeon 34122 (KR); JEON, Young Je, Daejeon 34122 (KR); YOON, Kyoung Soon, Daejeon 34122 (KR)
(74) Representative: Goddar, Heinz J.
(86) International application number: PCT/KR2024/015273
(87) International publication number: WO 2025/079959

(57) **Abstract**

The present disclosure relates to an electrode assembly, and the electrode assembly according to one aspect of the present disclosure may include a first electrode including a first body portion coated with a first electrode active material and a first tab portion extending outward from an edge of the first body portion; a second electrode including a second body portion stacked on one surface of the first body portion and coated with a second electrode active material, and an uncoated portion provided on an edge of the second body portion and overlapping the edge of the first body portion; and a separator interposed between the first electrode and the second electrode, wherein the first electrode may further include an extension portion provided on the edge of the first body portion and protruding outward from the uncoated portion.

## Description

### TECHNICAL FIELD

### CROSS-REFERENCE TO RELATED APPLICATIONS

The present application claims priority to Korean Patent Application No. 10-2023-0135425 filed on October 11, 2023 in the Republic of Korea, the disclosures of which are incorporated herein by reference.

### TECHNICAL FIELD

The present disclosure relates to an electrode assembly and a method for manufacturing the same, and more specifically, to an electrode assembly that can be used in a secondary battery and a method for manufacturing the same.

### BACKGROUND ART

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

To manufacture such a secondary battery, an electrode active material slurry is first applied to an electrode current collector to manufacture an electrode, which is then stacked on both sides of a separator to form an electrode stack having a predetermined shape. And, the electrode stack is accommodated in a battery case, an electrolyte solution is injected, and then the battery case is sealed.

The electrode stack is classified into various types. For example, there are the Simple Stack Type in which simply a positive electrode, a separator, and a negative electrode continue to be alternately stacked, the Lamination & Stack Type (L&S) in which electrode assemblies are first manufactured using unit electrodes and separators and then stacked, the Stack & Folding Type (S&F) in which a plurality of unit electrodes or electrode cells are spaced apart and attached to one surface of a separator sheet that is long on one side and the separator sheet is repeatedly folded in the same direction from one end, and the Z-Folding Type in which each of a plurality of electrodes or electrode cells is alternately attached to one surface and the other surface of a separator sheet that is long on one side and the separator sheet is folded in a specific direction from one end and then folded in the opposite direction alternately and repeatedly.

At this time, the electrode assembly (or electrode cell) may be formed by cutting an electrode sheet coated with an electrode active material into a predetermined size and then stacking the manufactured electrodes with a separator interposed therebetween. In order to verify whether the electrodes are relatively properly stacked (or positioned), the gap between the stacked electrodes is measured. In general, to check the gap, the distance between the edge of the electrode stacked on the upper side and the edge of the electrode stacked on the lower side is measured, and if the measured distance is within a predetermined range, it is determined that the electrodes are properly stacked (that is, it is determined to be free of defects).

Meanwhile, the edge of the electrode may be provided with an uncoated portion to which the electrode active material is not applied. In general, the uncoated portion is provided along the edge on both sides in the length direction (or width direction) of the electrode. Such an uncoated portion may perform various functions.

As an example, the uncoated portion may improve island defects caused by aggregation or splattering of the excess electrode active material or foreign substances on the metal sheet when the electrode active material is applied (or coated) to the metal sheet, which is the current collector. As another example, the uncoated portion may be utilized as a part that is cut in the notching process of the electrode, thereby preventing the area where the electrode active material is applied from being damaged by the notching process. These functions of the uncoated portion may be performed more effectively as the width of the uncoated portion extending from the edge of the electrode becomes wider.

However, if the uncoated portion of the electrode becomes wider, the gap between the stacked electrodes may be measured differently from the actual one, which may lead to an incorrect judgment of whether the electrode assembly is defective. More specifically, the wider the uncoated portion of the electrode stacked on the upper side, the more likely it is that the edge of the other electrode placed on the lower side will be covered by the uncoated portion. This may prevent the gap between the stacked electrodes from being accurately measured, which may lead to an incorrect judgment of whether there is a defect. This possibility of incorrect judgment has been a problem that limits the size of the uncoated portion, thereby limiting the improvement of island defects.

### SUMMARY

### TECHNICAL PROBLEM

The present disclosure is designed to solve the problems of the related art, and therefore the present disclosure is directed to providing an electrode assembly in which the gap between stacked electrodes may be accurately measured while island defects may be improved, and a method for manufacturing the same.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, disclosed is an electrode assembly, including a first electrode including a first body portion coated with a first electrode active material and a first tab portion extending outward from an edge of the first body portion; a second electrode including a second body portion stacked on one surface of the first body portion and coated with a second electrode active material, and an uncoated portion provided on an edge of the second body portion and overlapping the edge of the first body portion; and a separator interposed between the first electrode and the second electrode, wherein the first electrode further includes an extension portion provided on the edge of the first body portion and protruding outward from the uncoated portion.

At this time, the edge of the first body portion and the uncoated portion may extend parallel to each other.

At this time, the edge of the uncoated portion may form a predetermined interval in the width direction from the edge of the first body portion.

At this time, the edge of the uncoated portion may be located further outward than the edge of the first body portion.

At this time, a length of the extension portion extending from the first body portion may be shorter than a length of the first tab portion extending from the first body portion.

At this time, the first tab portion and the extension portion may be disposed to be spaced apart at a predetermined interval along the edge of the first body portion.

At this time, the second electrode may include a second tab portion provided on the edge of the second body portion, and the second tab portion and the extension portion may be spaced apart from each other so as not to overlap in the stacking direction of the first body portion and the second body portion.

At this time, the first tab portion may extend from one side of the first body portion, and the extension portion may extend from the other side of the first body portion.

At this time, the first tab portion and the extension portion may be disposed alternately with respect to the length direction of the first body portion.

At this time, the extension portion may have a film or sheet shape extending parallel to the first body portion.

At this time, the extension portion may include a first side parallel to the edge of the second body portion.

At this time, the extension portion may further include a second side that connects the first side and the first body portion and is perpendicular to or inclined to the first side.

At this time, the second electrode may include a protective layer provided on the outer surface of the uncoated portion.

According to another aspect of the present disclosure, provided is a method for manufacturing an electrode assembly, including a step of providing a first electrode including a first body portion in the shape of a film or sheet where a first electrode active material is applied, and a first tab portion and an extension portion extending from the edge of the first body portion; a step of providing a second electrode where a second electrode active material is applied to at least one area; a step of forming an electrode assembly by stacking the first electrode and the second electrode with a separator interposed therebetween; and a step of determining whether the electrode assembly is defective based on information about the relative positions of the extension portion protruding outward from the second electrode and the second electrode.

At this time, in the step of providing the second electrode, a second electrode including a film or sheet-shaped second body portion coated with a second electrode active material and an uncoated portion provided on the edge of the second body portion may be provided, and the step of determining whether the electrode assembly is defective may include a step of obtaining information about the relative position between the extension portion and the second body portion.

At this time, the step of obtaining information about the relative position between the extension portion and the second body portion may include a step of recognizing the edge of an end side of the extension portion in the extension direction; a step of recognizing the edge of the second body portion; and a step of measuring a reference distance, which is a distance between the edge of the extension portion and the edge of the second body portion.

At this time, the step of determining whether the electrode assembly is defective may include a step of comparing the reference distance with a length of the extension portion extending from the first body portion; and a step of determining whether the second body portion protrudes to the outside of the edge of the first body portion based on the comparison result.

At this time, in the step of determining whether the second body portion protrudes, if the reference distance is longer than the length of the extension portion, it may be determined that the second body portion does not protrude to the outside of the first body portion.

At this time, in the step of providing the second electrode, a second electrode including a film or sheet-shaped second body portion coated with a second electrode active material and a second tab portion extending from the edge of the second body portion may be provided, and in the step of stacking the first electrode and the second electrode, the second tab portion and the extension portion may be disposed so as not to overlap in a direction where the first electrode and the second electrode are stacked.

### ADVANTAGEOUS EFFECTS

According to the electrode assembly according to one aspect of the present disclosure and the method for manufacturing the same, the first electrode includes an extension portion extending outward from the first body portion, and thus, even if the edge of the first body portion is covered by the uncoated portion of the second electrode stacked on the upper side of the first electrode, the gap between the first and second electrodes may be accurately measured based on the relative position between the extension portion and the second electrode.

Accordingly, in the electrode assembly according to one aspect of the present disclosure and the method for manufacturing the same, the uncoated portion of the second electrode may have a wider width, thereby further increasing the effect of improving island defects.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a perspective view of an electrode assembly according to an embodiment of the present disclosure, as viewed from above. At this time, for the description of the present disclosure, the separator is indicated by a dotted line, and the configuration seen through the separator is indicated by a solid line.
FIG. 2 is an exploded perspective view of an electrode assembly according to an embodiment of the present disclosure.
FIG. 3 is a plan view of an electrode assembly according to an embodiment of the present disclosure. At this time, for the description of the present disclosure, the separator is not shown, and the configuration seen through the second electrode is indicated by a dotted line.
FIG. 4 is a cross-sectional view taken along line I-I of FIG. 1.
FIG. 5 is a plan view of a first electrode of an electrode assembly according to another embodiment of the present disclosure, as viewed from above.
FIG. 6 is a plan view of a first electrode of an electrode assembly according to still another embodiment of the present disclosure, as viewed from above.
FIG. 7 is a flow chart of a method for manufacturing an electrode assembly according to an embodiment of the present disclosure.
FIG. 8 is a flow chart subdividing step S400 of FIG. 7.
FIG. 9 is a plan view of an electrode assembly according to a comparative example. At this time, for the description of the present disclosure, the separator is not shown, and the configuration seen through the second electrode is indicated by a dotted line.

### DETAILED DESCRIPTION

Preferred embodiments of the present disclosure will be described in sufficient detail to enable those having ordinary skill in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

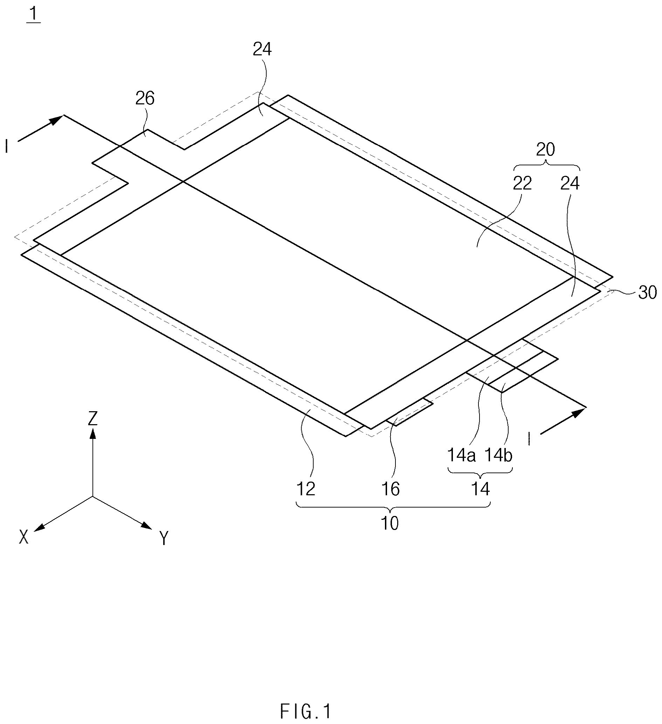

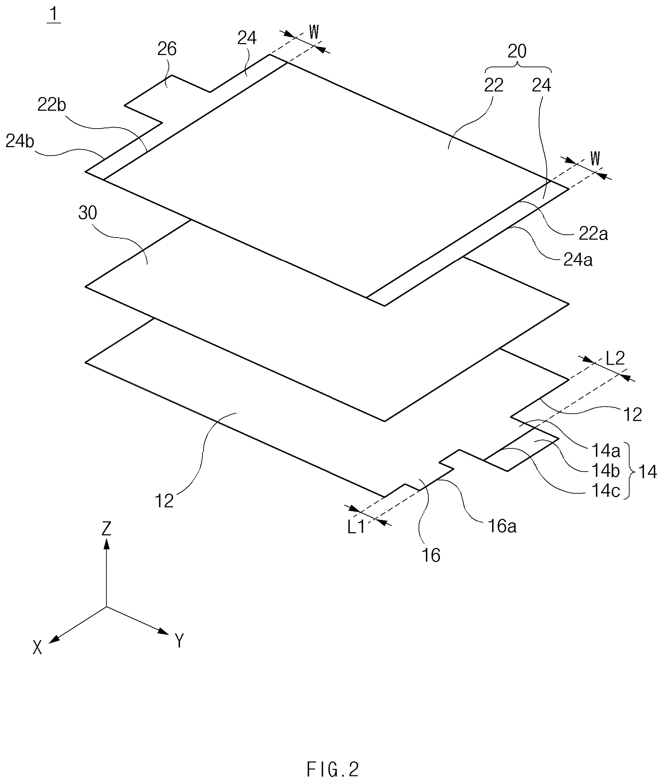

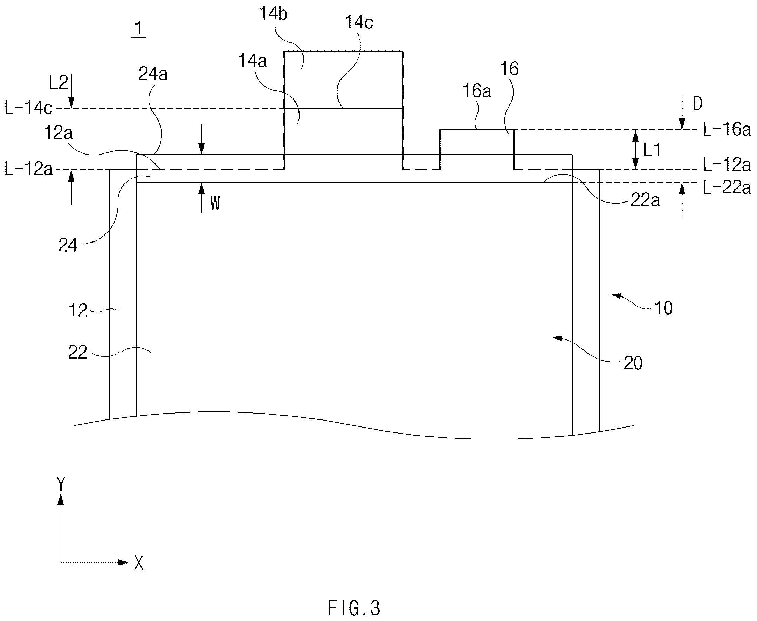

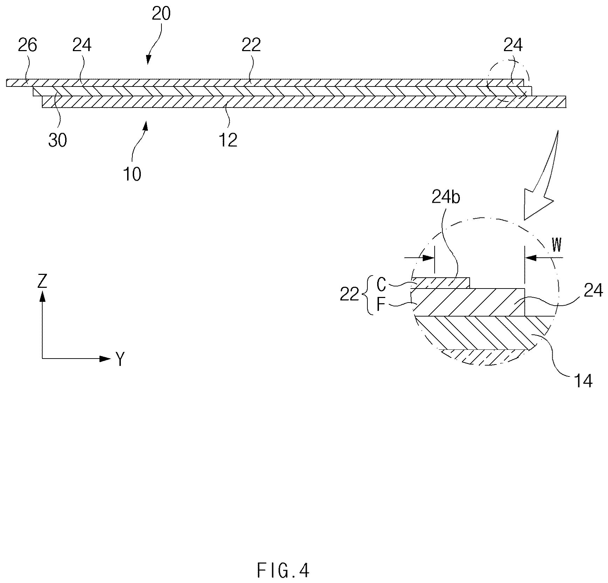

FIG. 1 is a perspective view of an electrode assembly according to an embodiment of the present disclosure, as viewed from above. At this time, for the description of the present disclosure, the separator is indicated by a dotted line, and the configuration seen through the separator is indicated by a solid line. FIG. 2 is an exploded perspective view of an electrode assembly according to an embodiment of the present disclosure. FIG. 3 is a plan view of an electrode assembly according to an embodiment of the present disclosure. At this time, for the description of the present disclosure, the separator is not shown, and the configuration seen through the second electrode is indicated by a dotted line. FIG. 4 is a cross-sectional view taken along line I-I of FIG. 1. At this time, in the drawings, each component of the secondary battery according to the first embodiment of the present disclosure is schematically shown, and the size of the component, the thickness of the line, or the like may be somewhat exaggerated for convenience of understanding.

In FIGS. 1 to 4, disclosed is an electrode assembly 1 according to the first embodiment of the present disclosure. The electrode assembly 1 according to the first embodiment of the present disclosure is an assembly that is provided inside a secondary battery and can discharge electric energy to the outside or be charged by receiving electric energy from the outside.

In this embodiment, the electrode assembly 1 may have a structure in which a first electrode 10 and a second electrode 20 are stacked in a vertical direction (Z-axis direction) with a separator 30 interposed therebetween. At this time, the first electrode 10 placed on the lower side may have an extension portion 16 extending outward. Such an extension portion 16 may protrude further outward than the uncoated portion 24 of the second electrode 20 placed on the upper side.

As a result, in the electrode assembly 1 according to this embodiment, even if the edge of the first electrode 10 is covered by the uncoated portion 24 of the second electrode 20, the gap between the second electrode 20 and the first electrode 10 may be measured based on information about the relative position between the second electrode 20 and the extension portion 16.

Therefore, in this embodiment, the uncoated portion 24 of the second electrode 20 may be formed with a wider width w regardless of whether it covers the edge of the first electrode 10, thereby maximizing the effects that can be achieved through the uncoated portion 24.

As an example, as the uncoated portion 24 of the second electrode 20 is provided in a wider area, the island defect of the second electrode 20 may be further improved. As another example, the uncoated portion 24 of the second electrode 20 may be used as a part that is cut in the notching process, thereby preventing the second body portion 22 where the electrode active material is applied from being damaged by the notching process. At this time, the notching process may be a laser notching process, but is not limited thereto.

Hereinafter, components according to the first embodiment of the present disclosure will be described in more detail. Referring to FIGS. 1 to 4, the electrode assembly 1 according to the first embodiment of the present disclosure may include a plurality of electrodes stacked on each other. As shown, the plurality of electrodes may include a first electrode 10 and a second electrode 20. At this time, the first electrode 10 and the second electrode 20 may have different polarities. For example, the first electrode 10 may be a negative electrode, and the second electrode 20 may be a positive electrode.

According to this embodiment, the first electrode 10 may include a first body portion 12. The first body portion 12 may be provided as a rectangular film or sheet-shaped member where the first electrode active material is applied to a thin metal plate. A first side 12a extending in one direction, for example, in the X-axis direction in the drawing, may be provided on the edge side of the first body portion 12. The shape of the first body portion 12 may be appropriately modified as necessary.

At this time, the thin metal plate may be made of aluminum (Al) or copper (Cu). The first electrode active material may include lithium-cobalt oxide (LCO), lithium-manganese oxide (LMO), nickel-cobalt-manganese (NCM), nickel-cobalt-aluminum (NCA), lithium-iron phosphate (LFP), graphite (C), silicon (Si), and the like. However, the type of materials forming the thin metal plate and the type of electrode active materials are not limited to those described above.

Referring to FIGS. 1 to 3, the first electrode 10 of the electrode assembly 1 according to the first embodiment of the present disclosure may include a first tab portion 14. The first tab portion 14 is configured to function as an interface that allows the first body portion 12 to be electrically connected to an external power source or load.

As shown, the first tab portion 14 may extend outward from the first side 12a of the first body portion 12. The first tab portion 14 may be provided as a rectangular film or sheet having a smaller width than the first body portion 12. The first tab portion 14 may be formed as the edge of the sheet where the first electrode active material is applied is cut by a notching process. The shape of the first tab portion 14 may be appropriately modified as necessary.

Meanwhile, according to the first embodiment of the present disclosure, the first tab portion 14 may include a first portion 14a and a second portion 14b. And, the first electrode active material may be applied to any one of the first portion 14a and the second portion 14b, and the first electrode active material may not be applied to the other one, so that the thin metal plate may be exposed to the outside.

Accordingly, a shoulder line 14c may be formed between the first portion 14a and the second portion 14b to divide them. In this embodiment, the second portion 14b is provided on the end side of the first tab portion 14, and the first portion 14a may be provided between the first body portion 12 and the second portion 14b to connect them. And, the first electrode active material is applied to the first portion 14a, the first electrode active material is not applied to the second portion 14b, and the shoulder line 14c may extend parallel to the width direction (X-axis direction) of the first body portion 12.

Meanwhile, referring to FIGS. 1 to 4 again, the first electrode 10 according to the first embodiment of the present disclosure may include an extension portion 16. In this embodiment, the extension portion 16 is a configuration used to measure the gap between the first electrode 10 and the second electrode 20. A specific description of the function of the extension portion 16 will be described later together with the second electrode 20.

The extension portion 16 may be provided on the edge of the first body portion 12. As shown, the extension portion 16 may extend outward from the first side 12a of the first body portion 12. At this time, the extension portion 16 may be disposed to be spaced apart from the first tab portion 14 at a predetermined interval in a direction where the first side 12a extends (X-axis direction).

According to this embodiment, the extension portion 16 may be provided in the form of a rectangular film or sheet. And, a reference side 16a extending in a direction (X-axis direction) parallel to the first side 12a of the first body portion 12 may be provided at the end side of the extension portion 16.

This reference side 16a may be a reference for measuring the gap between the first electrode 10 and the second electrode 20. At this time, the length of the reference side 16a may extend sufficiently to be recognized by a predetermined sensor or detection equipment.

Meanwhile, the extension portion 16 may extend outward from the first side 12a of the first body portion 12 by a predetermined length L1. At this time, L1 may mean a distance between the reference line L-12a parallel to the first side 12a and the reference line L-16a parallel to the reference side 16a, as shown in FIG. 3.

At this time, the length L1 by which the extension portion 16 extends outward from the first body portion 12 may be shorter than the length L2 by which the first portion 14a where the first electrode active material is applied in the first tab portion 14 extends outward from the first body portion 12. At this time, L2 may mean a distance between the reference line L-12a parallel to the first side 12a and the reference line L-14c parallel to the shoulder line 14c, as shown in FIG. 3.

Referring to FIGS. 1 to 4 again, the second electrode 20 of the electrode assembly 1 according to the first embodiment of the present disclosure may include a second body portion 22. The second body portion 22 may be provided in the shape of a rectangular film or sheet where a second electrode active material C (shown in FIG. 4) is applied to a thin metal plate F (shown in FIG. 4).

In this embodiment, a second side 22a may be provided on the edge side of the second body portion 22. The second side 22a may be the side closest to the first side 12a of the first electrode 10 among the sides provided on the edge side of the second body portion 22. And, the second side 22a may extend parallel to the first side 12a. The shape of the second body portion 22 may be appropriately modified as necessary.

At this time, the thin metal plate may be made of aluminum (Al) or copper (Cu). The second electrode active material may include lithium-cobalt oxide (LCO), lithium-manganese oxide (LMO), nickel-cobalt-manganese (NCM), nickel-cobalt-aluminum (NCA), lithium-iron phosphate (LFP), graphite (C), silicon (Si), and the like. However, the type of materials forming the thin metal plate and the type of electrode active materials are not limited to those described above.

Meanwhile, whether the electrode assembly 1 is defective or not may be determined depending on the relative positional relationship between the first body portion 12 and the second body portion 22. More specifically, when viewed in the stacking direction (Z-axis direction) of the first electrode 10 and the second electrode 20, the electrode assembly 1 may be treated as not defective if the second body portion 22 is positioned inside the edge of the first body portion 12, and the electrode assembly 1 may be treated as defective if the second body portion 22 is positioned outside the edge of the first body portion 12. To determine this, the gap between the first electrode 10 and the second electrode 20 may be measured.

This is because, if the second body portion 22 protrudes outward from the edge of the first body portion 12, the insulation between the first electrode 10 and the second electrode 20 is not sufficiently secured, and thus the electrode assembly 1 may not operate as its original function or may cause a stability problem.

Meanwhile, referring to FIGS. 1 to 4 again, the second electrode 20 of the electrode assembly 1 according to the first embodiment of the present disclosure may include an uncoated portion 24. The uncoated portion 24 may mean a portion where the thin metal plate is exposed to the outside because the second electrode active material is not applied.

This uncoated portion 24 may be provided on the edge side of the second body portion 22. In this embodiment, since the second electrode active material C (shown in FIG. 4) is applied to the central portion of the thin metal plate F (shown in FIG. 4) but not to the edge portion, the central portion of the thin metal plate becomes the second body portion 22, and the uncoated portion 24 may be provided on the edge side of the second body portion 22.

In this embodiment, the uncoated portion 24 may extend outward from the second side 22a of the second body portion 22. Accordingly, the uncoated portion 24 may have a predetermined width w in an outward direction of the second body portion 22. And, the uncoated portion 24 may extend in a direction parallel to the second side 22a. Of course, the uncoated portion 24 may also be provided on another side 22b opposite to the second side 22a of the second body portion 22.

According to this embodiment, the uncoated portion 24 may perform a predetermined function. As an example, the uncoated portion 24 may improve island defects that may be caused by splattering of the electrode active material or foreign substances during the process of applying the second electrode active material to the thin metal plate. As another example, the uncoated portion 24 may be utilized as a part that is cut in the notching process for forming the outer appearance of the second electrode 20, thereby preventing the second body portion 22 from being damaged by the notching process.

At this time, in this embodiment, the uncoated portion 24 of the second electrode 20 may be disposed to overlap the first side 12a of the first electrode 10 in the stacking direction (Z-axis direction). Here, overlapping the uncoated portion 24 and the first side 12a may mean that the uncoated portion 24 covers at least a part of the first side 12a.

And, in this embodiment, the extension portion 16 of the first electrode 10 described above may protrude further outward than the uncoated portion 24. As a result, the reference side 16a provided on the end side of the extension portion 16 may not overlap the uncoated portion 24 in the stacking direction. In other words, the reference side 16a may not be covered by the uncoated portion 24.

In this embodiment, since the extension portion 16 of the first electrode 10 protrudes outward from the uncoated portion 24 of the second electrode 20, the gap between the first electrode 10 and the second electrode 20 may be measured indirectly using information about the relative positions of the extension portion 16 and the second body portion 22.

In this way, since the first side 12a of the first body portion 12 may be covered in this embodiment, the uncoated portion 24 of the second electrode 20 may have a wider width w. In other words, the uncoated portion 24 may be formed with a wider area.

Accordingly, in the electrode assembly 1 according to the first embodiment of the present disclosure, the function of the uncoated portion 24 may be maximized. For example, the effect of improving the island defects of the electrode assembly 1 or the effect of preventing damage to the second body portion 22 by the notching process may be further increased.

A method of measuring the gap based on the relative positions of the extension portion 16 and the second body portion 22 according to this embodiment will be described later together with a method for manufacturing an electrode assembly according to an embodiment of the present disclosure.

Meanwhile, referring to FIGS. 2 to 4, the second electrode 20 of the electrode assembly 1 according to the first embodiment of the present disclosure may include a protective layer 24b. In this embodiment, the protective layer 24b may be provided on the outer surface of the uncoated portion 24.

At this time, the protective layer 24b may be located at a part of the outer surface of the uncoated portion 24 adjacent to the second body portion 22, as shown in FIG. 4. The protective layer 24b may extend along the second side 22b of the second body portion 22 from the outer surface of the uncoated portion 24.

Such a protective layer 24b may perform a predetermined function. For example, the protective layer 24b may perform a function of protecting the second body portion 22 to which the second electrode active material is applied in the notching process.

In this embodiment, the protective layer 24b may be formed by coating (or applying) a predetermined material on the outer surface of the uncoated portion 24. The material forming the protective layer 24b may be appropriately selected according to the function of the protective layer 24b. As an example, the material may be polyvinylidene fluoride (PVDF), but is not limited thereto.

Referring to FIGS. 1 to 3 again, the second electrode 20 of the electrode assembly 1 according to the first embodiment of the present disclosure may include a second tab portion 26. The second tab portion 26 is configured to function as an interface that allows the second body portion 22 to be electrically connected to an external power source or load.

In this embodiment, the second tab portion 26 may extend outward from the uncoated portion 24. And, as shown, the second tab portion 26 may be provided as a rectangular film or sheet having a smaller width than the second body portion 22. The shape of the second tab portion 26 may be appropriately modified as necessary.

At this time, in this embodiment, the second tab portion 26 may be spaced apart from the extension portion 16 of the first electrode 10 described above in a direction (X-axis direction or Y-axis direction) perpendicular to the stacking direction (Z-axis direction). This is to prevent the extension portion 16 of the first electrode 10 from being covered by the second tab portion 26 of the second electrode 20.

Meanwhile, the uncoated portion 24 and the second tab portion 26 of the second electrode 20 described above may be formed as the edge of the sheet where the second electrode active material is applied is cut by a notching process.

Referring to FIGS. 1 and 2 again, the electrode assembly 1 according to the first embodiment of the present disclosure may include a separator 30. In this embodiment, the separator 30 is configured to ensure the stability of the electrode assembly 1 by preventing the first electrode 10 and the second electrode 20 stacked on each other from contacting each other.

In this embodiment, the separator 30 may be provided as a rectangular film or sheet interposed between the first electrode 10 and the second electrode 20. At this time, the separator 30 may have a width and length greater than those of the first body portion 12 and the second body portion 22. Through this, insulation between the first electrode 10 and the second electrode 20 may be sufficiently ensured. The shape of the separator 30 may be appropriately modified as necessary.

At this time, the separator 30 may be made of polyethylene, polypropylene, or the like, but the material constituting the separator 30 is not particularly limited as long as it may ensure insulation between the first electrode 10 and the second electrode 20.

As described above, even if the edge of the first body portion 12 of the first electrode 10 is covered in the electrode assembly 1 according to this embodiment, the gap between the first electrode 10 and the second electrode 20 may be measured, and thus the uncoated portion 24 of the second electrode 20 may be formed to have a wider width or area. Through this, the function of the uncoated portion 24 may be more effectively exerted.

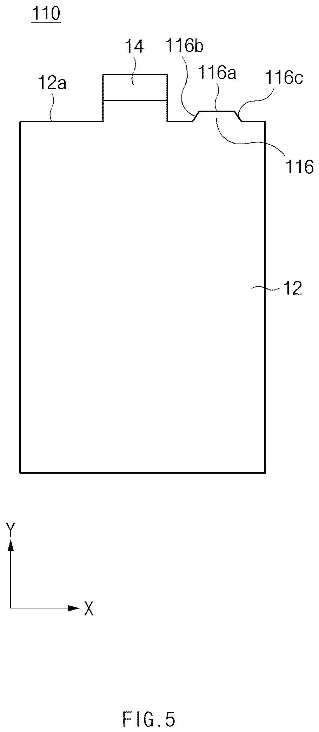

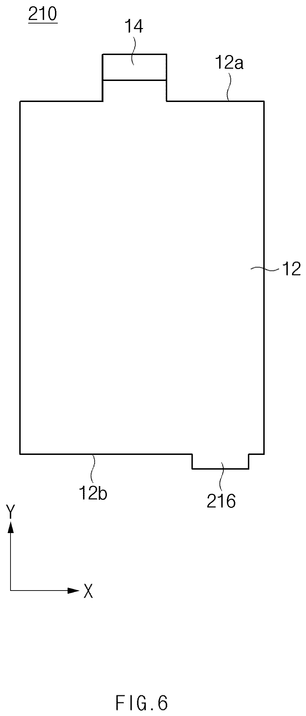

Hereinafter, electrode assemblies according to other embodiments of the present disclosure will be described with different drawings. FIG. 5 is a plan view of a first electrode of an electrode assembly according to another embodiment of the present disclosure, as viewed from above. FIG. 6 is a plan view of a first electrode of an electrode assembly according to still another embodiment of the present disclosure, as viewed from above. At this time, in the drawings, a second electrode of a secondary battery according to other embodiments of the present disclosure is schematically shown, and the size of the component, the thickness of the line, or the like may be somewhat exaggerated for convenience of understanding. And, the same reference numerals as in the drawings shown above indicate the same members performing the same functions.

According to an embodiment of the present disclosure, the extension portion of the first electrode may have various shapes. As an example, FIG. 5 discloses a first electrode 110 of an electrode assembly according to another embodiment of the present disclosure.

Referring to FIG. 5, in this embodiment, the extension portion 116 may extend from the first side 12a of the first body portion 12. A reference side 116a parallel to the first side 12a may be provided on the edge of the end side of the extension portion 116. At this time, the reference side 116a may extend to a sufficient length to be recognized by a sensor or detection equipment for sensing it.

In this embodiment, a first connection side 116b and a second connection side 116c may be provided on the edge of the side of the extension portion 116, respectively. The first connection side 116b may connect one end of the reference side 116a and the first side 12a to each other. And, the first connection side 116b may extend to be inclined to the reference side 116a. The second connection side 116c may connect the other end of the reference side 116a and the first side 12a to each other. And, the second connection side 116c may extend to be inclined to the reference side 116a.

At this time, the first connection side 116b and the second connection side 116c may be inclined to become closer to each other toward the end side of the extension portion 116. In other words, the extension portion 116 may have a trapezoidal shape. As such, the extension portion of the electrode assembly according to an embodiment of the present disclosure may be provided in various shapes.

According to an embodiment of the present disclosure, the extension portion of the first electrode may be provided in various positions. As an example, FIG. 6 discloses the first electrode 210 of the electrode assembly according to still another embodiment of the present disclosure.

Referring to FIG. 6, in this embodiment, a first tab portion 14 may be provided on the first side 12a of the first body portion 12. At this time, the extension portion 216 may be provided on the other side 12b of the first body portion 12 opposite to the first side 12a.

In this embodiment, the extension portion 216 may extend outward from the other side 12b of the first body portion 12. At this time, the extension portion 216 may be disposed to be misaligned with the first tab portion 14 in the length direction (Y-axis direction) of the first body portion 12.

This is to prevent the extension portion 216 from being covered by the second tab portion of the second electrode, as the second tab portion of the second electrode may be disposed parallel to the first tab portion 14 in the length direction of the first body portion 12.

As such, the extension portion of the electrode assembly according to an embodiment of the present disclosure may be located at various parts of the edge of the first body portion 12 as long as it may not be covered by the second tab portion of the second electrode.

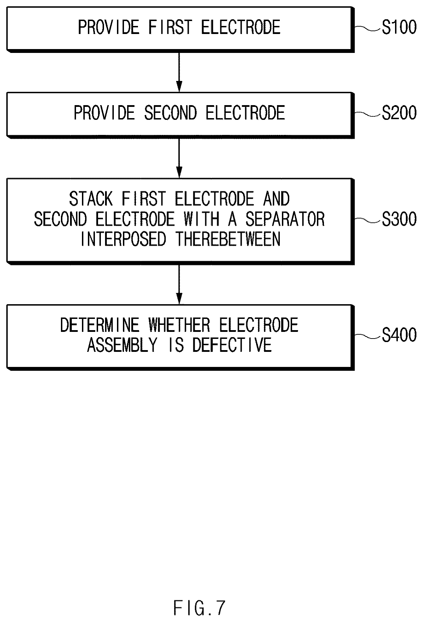

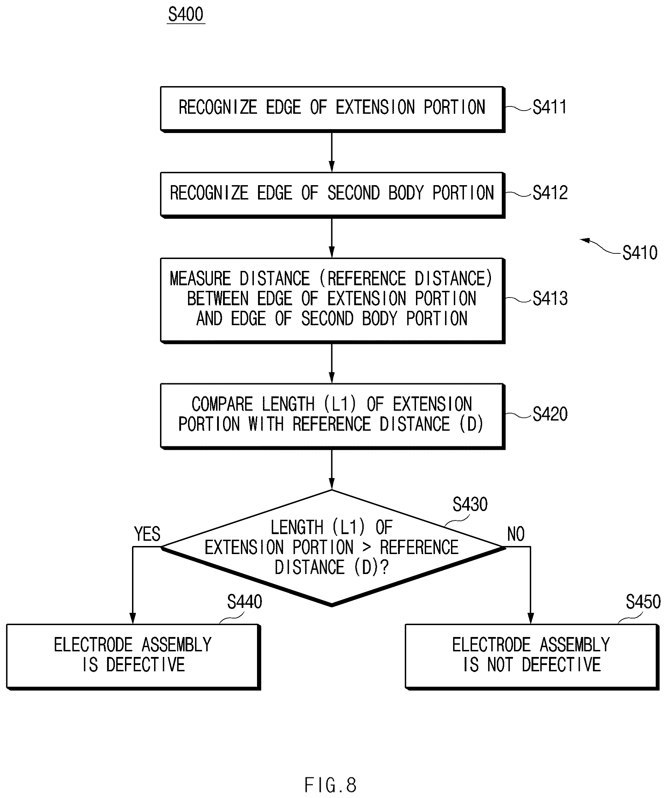

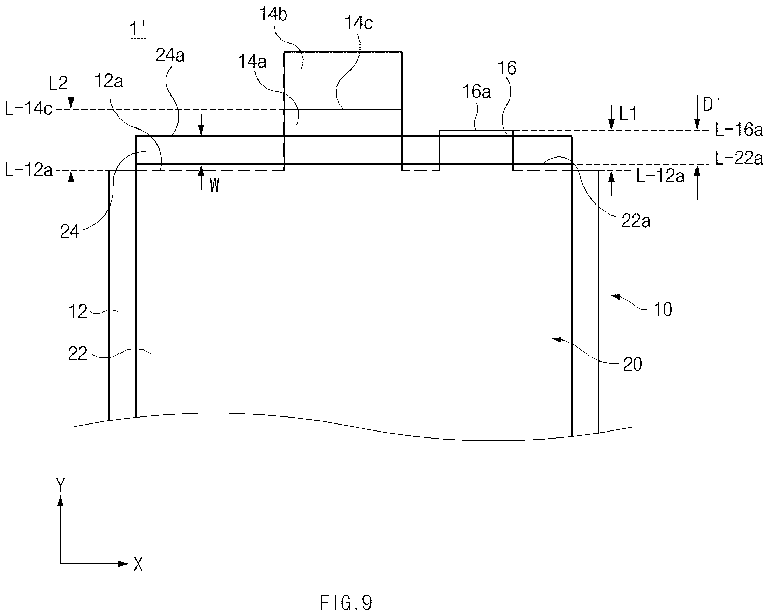

Hereinafter, a method for manufacturing an electrode assembly according to an embodiment of the present disclosure will be described with different drawings. FIG. 7 is a flow chart of a method for manufacturing an electrode assembly according to an embodiment of the present disclosure. FIG. 8 is a flow chart subdividing step S400 of FIG. 7. FIG. 9 is a plan view of an electrode assembly according to a comparative example. At this time, for the description of the present disclosure, the separator is not shown, and the configuration seen through the second electrode is indicated by a dotted line.

Referring to FIGS. 1, 2, and 7, in a method for manufacturing an electrode assembly according to an embodiment of the present disclosure, a first electrode 10 is provided (S100). At this time, the first electrode 10 provided in step S100 may be the first electrode 10 of the electrode assembly 1 according to the first embodiment of the present disclosure.

That is, the first electrode 10 provided in step S100 may include a first body portion 12 to which a first electrode active material is applied, a first tab portion 14 extending outward from a first side 12a provided on the edge side of the first body portion 12, and an extension portion 16 spaced apart from the first tab portion 14 and extending outward from the first side 12a. However, the structure of the first electrode 10 provided in step S100 is not particularly limited as long as it includes the extension portion 16.

Referring to FIGS. 1 to 3 and 7, in a method for manufacturing an electrode assembly according to an embodiment of the present disclosure, a first electrode 10 is provided (S100), and a second electrode 20 is provided (S200). At this time, the order of step S100 and step S200 is not particularly limited.

According to this embodiment, the second electrode 20 provided in step S200 may be the second electrode 20 of the electrode assembly 1 according to the first embodiment of the present disclosure. That is, the second electrode 20 may include a second body portion 22 to which a second electrode active material is applied, an uncoated portion 24 extending from a second side 22a provided on the edge of the second body portion 22 to have a predetermined width w, and a second tab portion 26 extending from the uncoated portion 24. However, the structure of the second electrode 20 provided in step S200 is not particularly limited.

Referring to FIGS. 1, 2, and 7 again, in a method for manufacturing an electrode assembly according to an embodiment of the present disclosure, the first electrode 10 provided in step S100 and the second electrode 20 provided in step S200 are stacked with the separator 30 interposed therebetween to form an electrode assembly 1 (S300). At this time, in step S300, the second electrode 20 may be placed above the first electrode 10.

At this time, according to the method for manufacturing an electrode assembly according to an embodiment of the present disclosure, in step S300, the extension portion 16 of the first electrode 10 and the second tab portion 26 of the second electrode 20 may be disposed so as not to overlap each other in the stacking direction (Z-axis direction).

Here, the fact that the extension portion 16 and the second tab portion 26 do not overlap each other may mean that the extension portion 16 is not covered by the second tab portion 26. This is to enable a sensor or inspection equipment placed above the electrode assembly 1 to recognize the extension portion 16 of the first electrode 10 in step S400 to be described later.

Referring to FIGS. 1 to 3 and 7, in a method for manufacturing an electrode assembly according to an embodiment of the present disclosure, a first electrode 10 and a second electrode 20 are stacked to form an electrode assembly 1 (S300), and it is determined whether the formed electrode assembly 1 is defective (S400).

In this embodiment, whether the electrode assembly 1 is defective or not may be determined based on the relative position between the first body portion 12 of the first electrode 10 and the second body portion 22 of the second electrode 20. More specifically, when viewed in the stacking direction (Z-axis direction) of the first and second electrodes 10, 20, the electrode assembly 1 may be determined to be free of defects if the second body portion 22 is positioned inside the edge of the first body portion 12, and the electrode assembly 1 may be determined to be defective if the second body portion 22 protrudes to the outside of the edge of the first body portion 12.

At this time, in step S400 of the method for manufacturing an electrode assembly according to an embodiment of the present disclosure, in order to determine whether the electrode assembly 1 is defective, the edge position of the first body portion 12 and the edge position of the second body portion 22 are not directly compared, but the relative positional relationship between the first body portion 12 and the second body portion 22 (i.e., the gap between the first electrode 10 and the second electrode 20) is indirectly determined based on the relative positions of the extension portion 16 and the second body portion 22.

As a result, in this embodiment, even if the uncoated portion 24 provided on the edge of the second body portion 22 covers the edge portion of the first body portion 12, it is possible to appropriately determine whether the electrode assembly 1 is defective.

Therefore, in the electrode assembly 1 manufactured by the method for manufacturing an electrode assembly according to an embodiment of the present disclosure, the uncoated portion 24 of the second electrode 20 may have a wider width w, thereby maximizing the effect of the uncoated portion 24.

Referring to FIGS. 3 and 8, in step S400 of the method for manufacturing an electrode assembly according to an embodiment of the present disclosure, first, information about the relative position between the extension portion 16 of the first electrode 10 and the second electrode 20 is obtained (S410). At this time, step S410 may be performed by a predetermined sensor or detection equipment, but is not limited thereto.

In this embodiment, in step S410, the edge of the extension portion 16 is recognized (S411), and the edge of the second body portion 22 is recognized (S412). The order of step S411 and step S412 is not particularly limited.

At this time, in step S411, the reference side 16a may be recognized as the edge of the extension portion 16. And, in step S412, the second side 22a may be recognized as the edge of the second body portion 22. At this time, the second side 22a may be a side adjacent to the first side 12a of the first body portion 12.

And, in step S410 of the method for manufacturing an electrode assembly according to an embodiment of the present disclosure, a distance D between the reference side 16a recognized in step S411 and the second side 22a recognized in step S412 is measured (S413). Hereinafter, the distance D is referred to as the reference distance D.

Referring to FIGS. 3, 8, and 9 again, in step S400 of the method for manufacturing an electrode assembly according to an embodiment of the present disclosure, information about the reference distance D is obtained as information about the relative positions of the extension portion 16 and the second electrode 20 (S410), and the reference distance D obtained in step S410 and the length L1 by which the extension portion 16 extends from the first side 12a of the first body portion 12 are compared with each other (S420).

At this time, in step S420 of the method for manufacturing an electrode assembly according to an embodiment of the present disclosure, it may be determined whether the length L1 by which the extension portion 16 extends from the first side 12a of the first body portion 12 is longer than the reference distance D.

And, in step S400 of the method for manufacturing an electrode assembly according to an embodiment of the present disclosure, the length L1 of the extension portion 16 and the reference distance D are compared with each other (S420), and it is determined whether the electrode assembly 1 is defective based on the comparison result (S430, S440).

At this time, in step S430 and step S440, in order to determine whether the formed electrode assembly 1 is defective, it may be determined whether the second body portion 22 protrudes to the outside of the edge of the first body portion 12 based on the comparison result of step S420.

More specifically, in step S400 according to this embodiment, if the reference distance D' is shorter than the length L1 of the extension portion 16 as shown in FIG. 9, it is determined that the electrode assembly 1' is defective (S430). This is because this comparison result suggests that at least a part of the second body portion 22 is located outside the edge of the first body portion 12.

Alternatively, in step S400 according to this embodiment, if the reference distance D is longer than the length L1 of the extension portion 16 as shown in FIG. 3, it is determined that the electrode assembly 1 is not defective (S440). This is because this comparison result suggests that the second body portion 22 is located inside the edge of the first body portion 12.

Whether the electrode assembly is defective or not may be determined by the above-described step S400. If it is determined that the electrode assembly is defective, the electrode assembly may be discarded. Alternatively, the electrode assembly may be separated into the first electrode, the second electrode, and the separator and then stacked again.

In this way, according to the method for manufacturing an electrode assembly according to an embodiment of the present disclosure, even if the edge portion of the first body portion is covered by the uncoated portion of the second electrode, the gap between the first electrode and the second electrode may be measured indirectly based on information about the relative position between the extension portion and the second electrode. Accordingly, in the electrode assembly manufactured by this manufacturing method, the uncoated portion of the second electrode may be formed in a wider area, thereby further increasing the effect thereof.

Meanwhile, in step S400 of the method for manufacturing an electrode assembly according to an embodiment of the present disclosure, the reference distance D between the reference side 16a and the first side 12a is obtained as information about the relative positions of the extension portion 16 and the second electrode 20, and the length L1 of the extension portion 16 and the reference distance D are compared with each other. However, step S400 of the method for manufacturing an electrode assembly according to this embodiment is only an example of a method for determining whether the electrode assembly is defective based on information about the relative positions of the extension portion 16 and the second electrode 20, and step S400 may be appropriately modified as necessary.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

1: Electrode assembly
10, 110, 210: First electrode
12: First body portion
14: First tab portion
16, 116, 216: Extension portion
20: Second electrode
22: Second body portion
24: Uncoated portion
26: Second tab portion
30: Separator

## Claims

1. An electrode assembly, comprising:
a first electrode comprising a first body portion coated with a first electrode active material and a first tab portion extending outward from an edge of the first body portion;
a second electrode comprising a second body portion stacked on one surface of the first body portion and coated with a second electrode active material, and an uncoated portion provided on an edge of the second body portion and overlapping the edge of the first body portion; and
a separator interposed between the first electrode and the second electrode,
wherein the first electrode further comprises an extension portion provided on the edge of the first body portion and protruding outward from the uncoated portion.

2. The electrode assembly according to claim 1,
wherein the edge of the first body portion and the uncoated portion extend parallel to each other.

3. The electrode assembly according to claim 2,
wherein the edge of the uncoated portion forms a predetermined interval in the width direction from the edge of the first body portion.

4. The electrode assembly according to claim 3,
wherein the edge of the uncoated portion is located further outward than the edge of the first body portion.

5. The electrode assembly according to claim 1,
wherein a length of the extension portion extending from the first body portion is shorter than a length of the first tab portion extending from the first body portion.

6. The electrode assembly according to claim 1,
wherein the first tab portion and the extension portion are disposed to be spaced apart at a predetermined interval along the edge of the first body portion.

7. The electrode assembly according to claim 1,
wherein the second electrode comprises a second tab portion provided on the edge of the second body portion, and
the second tab portion and the extension portion are spaced apart from each other so as not to overlap in the stacking direction of the first body portion and the second body portion.

8. The electrode assembly according to claim 1,
wherein the first tab portion extends from one side of the first body portion, and
the extension portion extends from the other side of the first body portion.

9. The electrode assembly according to claim 8,
wherein the first tab portion and the extension portion are disposed alternately with respect to the length direction of the first body portion.

10. The electrode assembly according to claim 1,
wherein the extension portion has a film or sheet shape extending parallel to the first body portion.

11. The electrode assembly according to claim 10,
wherein the extension portion comprises a first side parallel to the edge of the second body portion.

12. The electrode assembly according to claim 11,
wherein the extension portion further comprises a second side that connects the first side and the first body portion and is perpendicular to or inclined to the first side.

13. The electrode assembly according to claim 1,
wherein the second electrode comprises a protective layer provided on the outer surface of the uncoated portion.

14. A method for manufacturing an electrode assembly, comprising:
a step of providing a first electrode comprising a first body portion in the shape of a film or sheet where a first electrode active material is applied, and a first tab portion and an extension portion extending from the edge of the first body portion;
a step of providing a second electrode where a second electrode active material is applied to at least one area;
a step of forming an electrode assembly by stacking the first electrode and the second electrode with a separator interposed therebetween; and
a step of determining whether the electrode assembly is defective based on information about the relative positions of the extension portion protruding outward from the second electrode and the second electrode.

15. The method for manufacturing an electrode assembly according to claim 14,
wherein in the step of providing the second electrode, a second electrode comprising a film or sheet-shaped second body portion coated with a second electrode active material and an uncoated portion provided on the edge of the second body portion is provided, and
the step of determining whether the electrode assembly is defective comprises a step of obtaining information about the relative position between the extension portion and the second body portion.

16. The method for manufacturing an electrode assembly according to claim 15,
wherein the step of obtaining information about the relative position between the extension portion and the second body portion comprises:
a step of recognizing the edge of an end side of the extension portion in the extension direction;
a step of recognizing the edge of the second body portion; and
a step of measuring a reference distance, which is a distance between the edge of the extension portion and the edge of the second body portion.

17. The method for manufacturing an electrode assembly according to claim 16,
wherein the step of determining whether the electrode assembly is defective comprises:
a step of comparing the reference distance with a length of the extension portion extending from the first body portion; and
a step of determining whether the second body portion protrudes to the outside of the edge of the first body portion based on the comparison result.

18. The method for manufacturing an electrode assembly according to claim 17,
wherein in the step of determining whether the second body portion protrudes, if the reference distance is longer than the length of the extension portion, it is determined that the second body portion does not protrude to the outside of the first body portion.

19. The method for manufacturing an electrode assembly according to claim 14,
wherein in the step of providing the second electrode, a second electrode comprising a film or sheet-shaped second body portion coated with a second electrode active material and a second tab portion extending from the edge of the second body portion is provided, and
in the step of stacking the first electrode and the second electrode, the second tab portion and the extension portion are disposed so as not to overlap in a direction where the first electrode and the second electrode are stacked.
